# EUROPEAN PATENT APPLICATION

(11) **EP 4 769 756 A1**
(43) Date of publication of application: **01.07.2026**
(21) Application number: 24831799.2
(22) Date of filing: 19.06.2024
(51) Int. Cl.: H01M 50/35, H01M 10/6563, H01M 50/204, H01M 50/358

(54) **BATTERY HOUSING BODY AND BATTERY PACK**

(30) Priority: 29.06.2023 JP 2023106597
(71) Applicant: Organo Corporation, Tokyo 136-8631 (JP)
(72) Inventor: AIBA Kenta, Tokyo 136-8631 (JP)
(74) Representative: Müller-Boré & Partner Patentanwälte PartG mbB
(86) International application number: PCT/JP2024/022252
(87) International publication number: WO 2025/004937

(57) **Abstract**

Battery container 1 includes enclosure 11 having air inlet 11a and air outlet 11b for housing at least one battery cell 2, air mover 14 that generates a flow of air from air inlet 11a toward air outlet 11b inside enclosure 11, and reactive gas remover 15 that removes reactive gas generated from at least one battery cell 2 and discharged from air outlet 11b by the flow of air.

## Description

### Technical Field

The present invention relates to a battery container and a battery pack.

### Background Art

In recent years, sulfide-based solid electrolytes that exhibit high ionic conductivity have been developed as solid electrolytes for use in all-solid-state batteries. On the other hand, sulfide-based solid electrolytes can react with moisture to generate hydrogen sulfide, and therefore countermeasures against such hydrogen sulfide are an issue for the practical application of all-solid-state batteries using sulfide-based solid electrolytes. Patent Literature 1 discloses a technique for preventing the leakage of hydrogen sulfide generated in an enclosure that houses battery cells to the outside, in which a hydrogen sulfide remover is installed in a communication opening between the inside and outside of the enclosure.

### Citation List

### Patent Literature

Patent Literature 1: JP 2018-73802 A

### Summary of Invention

### Technical Problem

However, the technique disclosed in Patent Literature 1 does not consider the effects of continuous hydrogen sulfide generation at all. Specifically, it does not consider the following possibilities that may occur if the hydrogen sulfide concentration inside the enclosure increases to a certain level: one is that hydrogen sulfide as a flammable gas may react with oxygen to burn, and another is that hydrogen sulfide as a corrosive gas may corrode the materials of the battery cell and its accessories (electrode terminals, electrical circuits, etc.). This problem of gas remaining may similarly occur when reactive gases other than hydrogen sulfide are generated, and it may also occur in batteries containing sulfide-based solid electrolytes other than all-solid-state batteries when various reactive gases are generated. For this reason, there is a need for measures that can be applied to such a wide variety of reactive gases.

It is therefore an object of the present invention to provide a battery container and a battery pack that prevent the leakage of reactive gas generated therein to the outside and also prevent such reactive gas from staying therein.

### Solution to Problem

To achieve the above object, a battery container of the present invention includes an enclosure having an air inlet and an air outlet for housing at least one battery cell, an air mover that generates a flow of air inside the enclosure from the air inlet toward the air outlet, and a reactive gas remover that removes reactive gas generated from the at least one battery cell and discharged from the air outlet by the flow of air.

In addition, a battery pack of the present invention includes at least one battery cell, the battery container described above, and a controller for controlling the at least one battery cell.

According to the battery container and the battery pack, air is allowed to flow inside the enclosure from the air inlet toward the air outlet, so that even if reactive gas is generated from the battery cell, it can be prevented from staying in the enclosure. This prevents the concentration of the reactive gas in the enclosure from increasing, thereby reducing the possibility of the reactive gas having adverse effects inside the enclosure. Furthermore, such reactive gas is removed by the reactive gas remover as it flows through the exhaust piping, and therefore it does not leak to the outside.

### Advantageous Effects of Invention

As described above, the present invention can prevent the leakage of reactive gas generated in the battery container and battery pack to the outside, and can also prevent such reactive gas from staying therein.

### Brief Description of the Drawings

FIG. 1 is a schematic configuration diagram of a battery pack according to a first embodiment of the present invention;
FIG. 2 is a schematic configuration diagram of a battery pack according to a second embodiment of the present invention;
FIG. 3 is a schematic configuration diagram of a battery pack according to a third embodiment of the present invention;
FIG. 4 is a schematic configuration diagram of a battery pack according to a fourth embodiment of the present invention; and
FIG. 5 is a schematic configuration diagram of a battery pack according to a fifth embodiment of the present invention.

### Description of Embodiments

Embodiments of the present invention will be described below with reference to the drawings. Components common to the embodiments will be denoted by the same reference numerals in the drawings, and a repetitive explanation will be omitted as appropriate. Furthermore, as may be mentioned again below, the characteristic components and variations in each embodiment may be applied to other embodiments as long as they do not conflict therewith.

In the following embodiments, an all-solid-state battery containing a sulfide-based solid electrolyte is exemplified as a battery cell from which reactive gas can be generated, and hydrogen sulfide which is flammable and corrosive is exemplified as the reactive gas to be removed by the present invention, but the present invention is not limited thereto. In other words, the reactive gas to be removed by the present invention may be a reactive gas other than hydrogen sulfide that is generated by an all-solid-state battery containing a sulfide-based solid electrolyte. "Reactive gas" as used herein broadly means a gas that can chemically react with other elements or compounds. Examples of the reactive gas include sulfur (including allotropes such as S, S₂, and S₈), sulfur oxides (sulfur monoxide, sulfur dioxide, sulfur trioxide, etc.), halogens (fluorine, chlorine, bromine, iodine, etc.), oxygen, and carbon dioxide. Alternatively, it may be a reactive gas generated from other types of batteries, such as hydrogen, carbon dioxide, methane, ethane, ethylene, hydrogen fluoride, or carbon monoxide generated by lithium ion batteries; fluorine or hydrogen fluoride generated by fluoride batteries; hydrogen or oxygen generated by aqueous batteries such as aqueous lithium-ion batteries or zinc negative electrode batteries; or sulfur dioxide generated by inorganic electrolyte batteries. On the other hand, the reactive gas to be removed by the present invention may also be a vapor of an organic solvent used in the nonaqueous electrolyte of a lithium-ion battery. Examples of the organic solvent include ethylene carbonate, propylene carbonate, fluoroethylene carbonate, dimethyl carbonate, diethyl carbonate, ethyl methyl carbonate, γ-butyrolactone, and propyl propionate.

### (First embodiment)

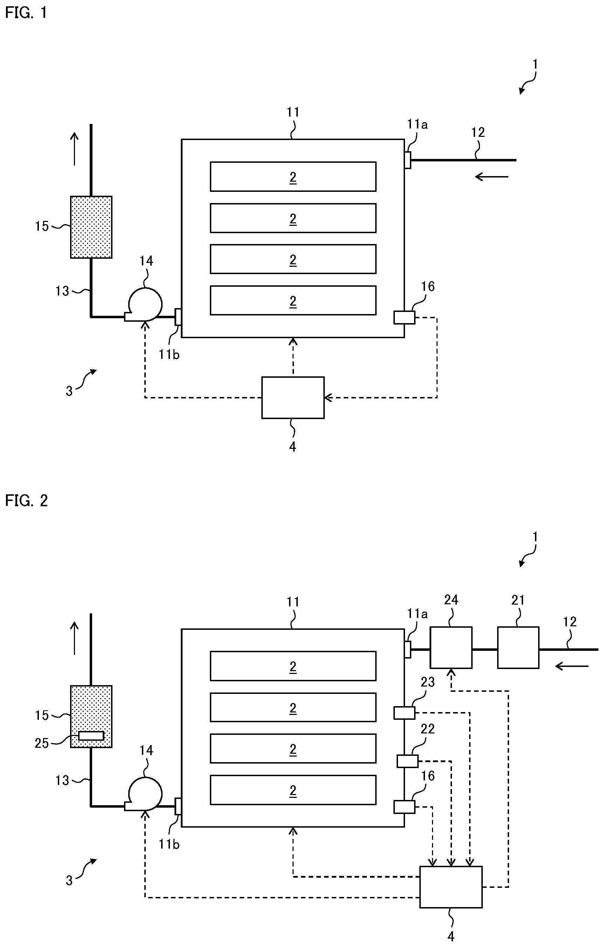

FIG. 1 is a schematic configuration diagram of a battery pack according to a first embodiment of the present invention.

Battery pack 1 includes multiple battery cells 2 and at least one pair of electrode terminals (not shown). Battery cells 2 are electrically connected to each other. The manner of connecting them is not particularly limited, and may be in series, in parallel, or a combination thereof. Battery cells 2 may be at least partially restrained by a restraining member. At least one pair of electrode terminals is electrically connected to battery cells 2 by an electrical circuit, also not shown, so that power can be drawn from battery cells 2. FIG. 1 shows four battery cells 2, but the number of battery cells 2 included in battery pack 1 is not limited thereto. Battery pack 1 may include multiple battery modules (i.e., assembled batteries) each including multiple battery cells 2. In other words, battery cells 2 may be modularized to form a battery module, and multiple such battery modules may be assembled to form battery pack 1.

Battery cell 2 is an all-solid-state battery and includes a positive electrode, a negative electrode, and a solid electrolyte layer disposed between the positive and negative electrodes. As an example, the positive electrode includes a positive electrode current collector and a positive electrode active material layer, and the negative electrode includes a negative electrode current collector and a negative electrode active material layer. The positive electrode current collector, positive electrode active material layer, solid electrolyte layer, negative electrode active material layer, and negative electrode current collector are stacked in this order to form a laminate, which is housed in a laminate-type, cylindrical, or square battery case. A reinforcing layer made of a curable resin may be provided around the laminate, if necessary.

The positive and negative electrode current collectors may be of known types commonly used in all-solid-state batteries. The material used for the positive electrode current collector may be metal such as aluminum, stainless steel, or titanium, and examples of the forms thereof include foil, film, sheet, and mesh. The material used for the negative electrode current collector may be metal such as stainless steel, nickel, or copper, and examples of the forms thereof include foil, film, and sheet.

The positive electrode active material layer contains at least a positive electrode active material, and the negative electrode active material layer contains at least a negative electrode active material. The positive electrode active material is not particularly limited as long as it occludes and releases metal ions such as lithium ions, and for example, sulfur, a lithium-containing transition metal oxide, a transition metal fluoride, a polyanion compound, or a transition metal sulfide may be used. The negative electrode active material is not particularly limited as long as it occludes and releases metal ions such as lithium ions, and for example, metallic lithium, a metal or alloy that can be alloyed with lithium, a carbon material such as graphite or hard carbon, a transition metal oxide, a transition metal sulfide, or silicon may be used. The positive electrode active material layer and the negative electrode active material layer may each contain a solid electrolyte or a binder as appropriate.

The solid electrolyte layer contains at least a sulfide-based solid electrolyte. Examples of the sulfide solid electrolyte include Li₂S-SiS₂-based, Li₂S-B₂S₃-based, Li₂S-P₂S₃-based, Li₂S-P₂S₅-based, Li₂S-GeS₂-based, Li₂S-B₂S₃-based, Li₃PO₄-P₂S₅-based, and Li₄SiO₄-Li₂S-SiS₂-based glasses, and their glass-ceramics; examples thereof also include Li_{3.25}Ge_{0.25}P_{0.75}S₄ and Li₁₀GeP₂S₁₂. Furthermore, these may be supplemented with additives such as LiCl, LiBr, Lil, and LiₓMO_{y} (where M is P, Si, Ge, B, Al, Ga, or In; x and y are natural numbers), and further heat treatment may also be applied thereto. If necessary, the solid electrolyte layer may contain a binder and may contain a solid electrolyte of a type different from the sulfide-based solid electrolyte. Examples of the solid electrolyte include halide-based solid electrolytes, oxide-based solid electrolytes, polymer-based solid electrolytes, hydride-based solid electrolytes, and nitride-based solid electrolytes.

Battery pack 1 also includes battery container 3 that houses battery cells 2. Battery container 3 is composed of enclosure 11, intake pipe 12, exhaust pipe 13, air mover 14, and hydrogen sulfide remover (reactive gas remover) 15.

Enclosure 11 functions to house battery cells 2 while allowing at least one pair of electrode terminals (not shown) to be drawn to the outside. Enclosure 11 has air inlet 11a for introducing air into enclosure 11 and air outlet 11b for discharging air from enclosure 11. Inside enclosure 11, fillers such as elastic, heat-transfer, and heatinsulating materials may be appropriately placed in spaces between battery cells 2 and between battery cells 2 and the restraining member described above. Although simplified in FIG. 1, considering heat release from battery cells 2, battery cells 2 are preferably housed in enclosure 11 with at least some of them in direct contact or in indirect contact (e.g., via the restraining member described above) with enclosure 11. The shape of enclosure 11 is not particularly limited and may be set arbitrarily according to the shape and arrangement of battery cells 2 to be housed. As described above, enclosure 11 may house multiple battery modules each including battery cells 2.

Intake pipe 12 is connected at one end (i.e., its downstream end) to air inlet 11a of enclosure 11 via an on-off valve (not shown). Exhaust pipe 13 is connected at one end (i.e., its upstream end) to air outlet 11b of enclosure 11 via an on-off valve (not shown). The locations where intake pipe 12 and exhaust pipe 13 are connected to enclosure 11 (i.e., the positions of air inlet 11a and air outlet 11b in enclosure 11) are not particularly limited, but they are preferably positioned opposite each other to allow air to distribute evenly inside enclosure 11. Intake pipe 12 may be provided with a filtering means, such as an air filter, to prevent foreign objects from entering from the outside.

Air mover 14 is installed in exhaust pipe 13 and functions to generate an air flow inside enclosure 11. Air mover 14 is not particularly limited, and for example, a fan, a blower, a pump, or a compressor may be used. In this case, air mover 14 may function to adjust the flow rate of air flowing into enclosure 11, with its output controlled by controller 4 described below. Electric power may be supplied from battery cells 2 to air mover 14 to drive air mover 14. Alternatively, a separate independent power supply may be provided, thereby ensuring that air mover 14 can be driven even if the output of battery cells 2 must be limited or stopped as will be described below.

Hydrogen sulfide remover 15 is installed in exhaust pipe 13 and functions to remove hydrogen sulfide (reactive gas) that is generated when the sulfide-based solid electrolyte contained in battery cell 2 reacts with moisture. Hydrogen sulfide remover 15 is not particularly limited, and for example, one may be used which is obtained by filling a cylindrical vessel made of a metal such as stainless steel with a hydrogen sulfide scavenger. Such a scavenger may be of a known type commonly used to remove hydrogen sulfide, and examples thereof include ion exchange resins, activated carbon (particularly activated carbon impregnated with basic compounds such as sodium hydroxide or potassium carbonate), activated alumina (particularly activated alumina impregnated with potassium permanganate), zeolites, basic solids such as calcium oxide and calcium carbonate, basic liquids such as aqueous sodium hydroxide solutions and aqueous sodium carbonate solutions, and ionic liquids having a moiety reactive with an acid, such as an amino group. Since hydrogen sulfide may have a temperature higher than room temperature due to the heat generated by battery cells 2, the hydrogen sulfide scavenger is preferably one that can maintain its hydrogen sulfide removal performance even at high temperatures, and more preferably one that has a removal mechanism based on an irreversible reaction. This ensures that hydrogen sulfide can be removed even at high temperatures and also prevents the hydrogen sulfide that has been removed from being released again. Some of the scavengers may generate powder depending on the environment in which battery pack 1 is used (for example, if battery pack 1 is used in an electric vehicle and subjected to vibration). In such cases, a filtering means, such as an air filter, may be provided downstream of hydrogen sulfide remover 15, thereby preventing the powder from leaking to the outside and preventing it from blocking the air flow or causing a dust explosion.

With this configuration, air mover 14 allows air to flow inside enclosure 11 from intake pipe 12 toward exhaust pipe 13. Therefore, even if hydrogen sulfide is generated from battery cells 2, it can be prevented from staying in enclosure 11 and increasing the hydrogen sulfide concentration inside enclosure 11. As a result, the possibility of hydrogen sulfide as a flammable gas reacting with oxygen in enclosure 11 to burn, or of hydrogen sulfide as a corrosive gas corroding the materials of battery cell 2, can be reduced. Furthermore, such hydrogen sulfide is removed by hydrogen sulfide remover 15 as it is discharged from the inside of enclosure 11 and flows through exhaust pipe 13 by the air flow, and therefore it does not leak to the outside. Even if another reactive gas with a density different from hydrogen sulfide is generated from battery cells 2, it can be reliably discharged by generating a forced air flow inside enclosure 11 using air mover 14. For this reason, the above-described configuration of this embodiment is also suitably used when battery cell 2 is a battery other than an all-solid-state battery, so that even if a wide variety of reactive gases are generated, they can be prevented from staying in enclosure 11.

In the illustrated example, air mover 14 is installed in exhaust pipe 13, but its location is not particularly limited as long as it can generate an air flow inside enclosure 11; for example, it may be located in intake pipe 12 or inside enclosure 11. When air mover 14 is installed in intake pipe 12, the on-off valve (not shown) on exhaust pipe 13 may be one that can be adjusted to any degree of opening. This allows the pressure inside enclosure 11 to increase by reducing its opening when hydrogen sulfide is generated from battery cells 2, so that the amount of hydrogen sulfide to be released from battery cells 2 can be reduced. When air mover 14 is installed in intake pipe 12 or inside enclosure 11, another exhaust pipe other than exhaust pipe 13 may be connected to enclosure 11 (via an on-off valve), which enables selection of the route for discharging hydrogen sulfide. As a result, if discharging hydrogen sulfide to the outside has little impact on the surrounding environment, hydrogen sulfide can be discharged without passing through hydrogen sulfide remover 15, thereby reducing the deterioration of hydrogen sulfide remover 15. Alternatively, even when air mover 14 is installed in exhaust pipe 13, the same effect can be achieved, for example, if exhaust pipe 13 is branched into two sections (via a three-way valve) downstream of air mover 14 and one of them is provided with hydrogen sulfide remover 15.

The air flow generation by air mover 14 may be constantly performed, but this may actually promote contact between the moisture and oxygen contained in the air introduced into enclosure 11 and battery cells 2. Therefore, under normal conditions, also from the viewpoint of reducing the power consumption of air mover 14, preferably, the on-off valves (not shown) on intake pipe 12 and exhaust pipe 13 are closed and air mover 14 is not activated. Then, when hydrogen sulfide is generated from battery cells 2, the air flow generation by air mover 14 is preferably started accordingly. In other words, preferably, the on-off valves on intake pipe 12 and exhaust pipe 13 are opened and air mover 14 is activated in response to the generation of hydrogen sulfide from battery cells 2. To this end, battery pack 1 includes hydrogen sulfide sensor (gas sensor) 16 and controller 4.

Hydrogen sulfide sensor 16 functions to detect the presence or concentration of hydrogen sulfide in enclosure 11. Hydrogen sulfide sensor 16 is not particularly limited and may be of a known type such as a constant potential electrolysis type, a semiconductor type, a thermal conduction type, or an electrical resistance type. The location of hydrogen sulfide sensor 16 is not limited to the illustrated location as long as it can detect the presence or concentration of hydrogen sulfide in enclosure 11. In the illustrated example, only one hydrogen sulfide sensor 16 is installed in enclosure 11, but multiple hydrogen sulfide sensors 16 may be provided. In this case, hydrogen sulfide sensors 16 may be located near every battery cell 2. To detect whether breakthrough of the above-described scavenger as hydrogen sulfide remover 15 has occurred, one of multiple hydrogen sulfide sensors 16 may be installed downstream of hydrogen sulfide remover 15. When multiple hydrogen sulfide sensors 16 are used, they may be of the same type but are preferably of different types. This allows the validity of the detection results of one hydrogen sulfide sensor 16 to be evaluated using another hydrogen sulfide sensor 16 of a different type, e.g., to diagnose whether hydrogen sulfide sensor 16 is malfunctioning under the influence of coexisting gases.

Controller 4 functions to control air mover 14 based on the detection results of hydrogen sulfide sensor 16. Specifically, when hydrogen sulfide is detected by hydrogen sulfide sensor 16, controller 4 opens the on-off valves on intake pipe 12 and exhaust pipe 13 and activates air mover 14 to generate an air flow inside enclosure 11. On the other hand, even if hydrogen sulfide as a flammable gas is generated in enclosure 11, the hydrogen sulfide will not burn unless its concentration reaches the flammable range. Therefore, controller 4 may control air mover 14 to adjust the flow rate of air flowing into enclosure 11, i.e., the amount of gas containing hydrogen sulfide flowing out of enclosure 11 so that the hydrogen sulfide concentration detected by hydrogen sulfide sensor 16 is less than the lower flammability limit. Alternatively, from the viewpoint of reducing the power consumption of air mover 14, controller 4 may close the on-off valves on intake pipe 12 and exhaust pipe 13 and deactivates air mover 14 at the timing when the hydrogen sulfide concentration detected by hydrogen sulfide sensor 16 falls sufficiently below the lower flammability limit. Controller 4 also functions to control the output of battery cells 2 so that, for example, the output of at least some of battery cells 2 can be limited or stopped for safety reasons when hydrogen sulfide is detected by hydrogen sulfide sensor 16. Controller 4 may also store the detection results of hydrogen sulfide sensor 16 or transmit them to a server or blockchain network for immediate or future use. When breakthrough of hydrogen sulfide remover 15 is detected as described above, controller 4 may output a notification to inform the user of this fact.

As described above, the air flow generation is preferably started by activating air mover 14 in conjunction with the detection of hydrogen sulfide, but this does not apply when battery cells 2 are inactive for an extended period of time. Specifically, if the air flow generation by air mover 14 is stopped while the output of battery cells 2 is inactive for an extended period of time and hydrogen sulfide stays in enclosure 11 for some reason, sparks or heat generated when battery cells 2 come into action could become an ignition source, causing the hydrogen sulfide to burn. Considering such a possibility, the air flow generation by air mover 14 is preferably started at the latest before battery cells 2 comes into action, and also from this perspective, a separate independent power supply for driving air mover 14 is preferably provided, as described above.

When the air flow generation by air mover 14 is not constantly performed, from the viewpoint of reducing the number of parts, the other members (i.e., gas flow members) 12-15 of battery container 3, excluding enclosure 11, may be detachably attached to enclosure 11. Thus, gas flow members 12-15 may be removed under normal conditions and attached to enclosure 11 when hydrogen sulfide is detected by hydrogen sulfide sensor 16, specifically when an alarm to that effect is issued by controller 4, to start the air flow generation by air mover 14. For example, when battery pack 1 is used as a storage battery for electric vehicles or for stationary applications, gas flow members 12-15 may be attached only when the alarm is issued by controller 4. This eliminates the need to attach gas flow members 12-15 to all storage batteries, including those for electric vehicles and stationary applications, thereby enabling a further reduction in the number of parts and simplification of the manufacturing process.

Furthermore, the detection of whether hydrogen sulfide is being generated in enclosure 11 may also not be constantly performed. Therefore, for example, hydrogen sulfide sensor 16 may also be detachable from enclosure 11, or an on-off valve may be provided between hydrogen sulfide sensor 16 and enclosure 11. Specifically, to detect whether hydrogen sulfide is being generated in enclosure 11 regularly or as needed, hydrogen sulfide sensor 16 may be attached to enclosure 11 each time, or the on-off valve between hydrogen sulfide sensor 16 and enclosure 11 may be opened each time. When two or more hydrogen sulfide sensors 16 are used as described above, one hydrogen sulfide sensor 16 may perform constant detection, and another hydrogen sulfide sensor 16 may perform detection only when one hydrogen sulfide sensor 16 detects hydrogen sulfide. This allows another hydrogen sulfide sensor 16 to obtain the correct detection result in the event of an error in the detection result of one hydrogen sulfide sensor 16. Controller 4 may be physically separated from enclosure 11 as illustrated, or it may be directly attached to enclosure 11, in which case it may be detachable. Thus, the number of parts in battery pack 1 during normal use can also be reduced.

On the other hand, when the priority is to inhibit corrosion by hydrogen sulfide, the air flow generation by air mover 14 may be performed independent of the detection of hydrogen sulfide by hydrogen sulfide sensor 16. For example, if hydrogen sulfide with a concentration of less than 1 ppm is generated, an inexpensive hydrogen sulfide sensor has difficulty detecting it, whereas such a low concentration of hydrogen sulfide could corrode the materials of battery cell 2. Therefore, regardless of the detection results of hydrogen sulfide sensor 16, regularly or continuously, the on-off valves on intake pipe 12 and exhaust pipe 13 may be opened and air mover 14 may be activated to generate an air flow inside enclosure 11. This allows the hydrogen sulfide concentration inside enclosure 11 to be kept low and prevents corrosion of the materials of battery cell 2 and its accessories (electrode terminals, electrical circuits, etc.).

Meanwhile, as a method to prevent the remaining of hydrogen sulfide by allowing gas to flow inside enclosure 11, instead of using air mover 14, a non-reactive gas such as an inert gas could be supplied from a gas cylinder connected to intake pipe 12, for example. However, this method may not generate a sufficient flow of gas (i.e., non-reactive gas) inside enclosure 11 and may not reliably control the increase in hydrogen sulfide concentration inside enclosure 11. The supply of non-reactive gas may also be increased to reduce the hydrogen sulfide concentration inside enclosure 11, but this would use up the non-reactive gas in the gas cylinder prematurely, causing the hydrogen sulfide concentration to rise again. Therefore, air mover 14 is preferably used as in this embodiment in that the hydrogen sulfide generated from battery cell 2 can be almost permanently prevented from staying in enclosure 11.

On the contrary, from another perspective, a non-reactive gas may preferably be supplied to the interior of enclosure 11. In other words, when the moisture concentration inside enclosure 11 is kept low by the introduction of non-reactive gas, the reaction between the sulfide-based solid electrolyte contained in battery cell 2 and moisture is suppressed, thereby enabling a reduction in the amount of hydrogen sulfide generated. Even if hydrogen sulfide is generated from battery cells 2, the risk of accelerated corrosion of the materials of battery cell 2 and its accessories in the presence of hydrogen sulfide and moisture can also be reduced. In addition, when the oxygen concentration inside enclosure 11 is kept low by the introduction of non-reactive gas, the possibility of hydrogen sulfide reacting with oxygen to burn can also be minimized.

In this embodiment, therefore, the air inside enclosure 11 may be replaced in advance with a non-reactive gas by filling the inside of enclosure 11 with the non-reactive gas while or after battery cells 2 are housed in enclosure 11. The non-reactive gas used in this case is not particularly limited as long as it does not contain moisture and oxygen that can react with the materials of battery cell 2 and its accessories or with hydrogen sulfide, and for example, the inert gas (nitrogen, argon, helium, etc.) described above may be used. As a means for supplying a non-reactive gas, for example, a filtering means for removing elements other than the non-reactive gas (e.g., moisture and oxygen) from the air introduced into enclosure 11, may be provided in intake pipe 12. Examples of the filtering means include a moisture removal column, a moisture removal filter, a breathable waterproof sheet, an oxygen removal column, and a nitrogen permeable membrane.

Hydrogen sulfide is generated as a result of an abnormality in battery cells 2; the amount of hydrogen sulfide generated may be slight in the early stages of the abnormality, but it may increase rapidly after a long period of time has passed. Consequently, the hydrogen sulfide that has been generated since the early stages of the abnormality may cause hydrogen sulfide remover 15 to deteriorate, and therefore, even when attempting to remove the large amount of hydrogen sulfide generated, it may not be possible to remove it completely, leading to leakage to the outside. To prepare for such an event, or simply for backup purposes, the number of hydrogen sulfide removers 15 is not limited to one as illustrated and may be two or more. For example, if another exhaust pipe other than exhaust pipe 13 may be connected to enclosure 11, as described above, the another exhaust pipe may also be provided with hydrogen sulfide remover 15. Alternatively, if exhaust pipe 13 may be branched into two sections downstream of air mover 14 and one of them may be provided with hydrogen sulfide remover 15, the other may also be provided with hydrogen sulfide remover 15. Thus, for example, if hydrogen sulfide sensor 16 detects that the hydrogen sulfide concentration inside enclosure 11 has suddenly increased and exceeded the threshold value, the air flow can be switched from hydrogen sulfide remover 15 that was previously in use to hydrogen sulfide remover 15 that was not in use to reliably remove hydrogen sulfide. On the other hand, the conditions inside enclosure 11 (e.g., presence of coexisting gases, temperature, humidity) when hydrogen sulfide is generated due to an abnormality in battery cells 2 are not always the same. Therefore, multiple hydrogen sulfide removers 15 are preferably of different types (i.e., characteristics), thereby allowing selection and use of hydrogen sulfide remover 15 with the most optimal characteristics for the conditions at that time.

As described above, air mover 14 may be installed in intake pipe 12 or inside enclosure 11, not in exhaust pipe 13 as illustrated, but its location is not limited thereto; for example, it may be located on enclosure 11. Specifically, air mover 14 may be directly attached to air outlet 11b of enclosure 11, in which case hydrogen sulfide remover 15 may be directly connected to the outlet of air mover 14. Alternatively, air mover 14 may be directly attached to air inlet 11a of enclosure 11, in which case hydrogen sulfide remover 15 may be directly connected to air outlet 11b of enclosure 11. Alternatively, air mover 14 may be directly attached to air outlet 11b of enclosure 11 via hydrogen sulfide remover 15, or in other words, directly attached to the outlet of hydrogen sulfide remover 15 that is directly connected to air outlet 11b of enclosure 11. In such cases, therefore, one or both of intake pipe 12 and exhaust pipe 13 may be omitted from the viewpoint of reducing the number of parts.

However, when intake pipe 12 and exhaust pipe 13 are both provided, there is an advantage that the intake and exhaust positions relative to enclosure 11 can be adjusted arbitrarily. This means that the optimum intake and exhaust positions can be selected according to the surrounding environment in which battery pack 1 is installed. For example, if the intake position is set at a position that minimizes the intake of air containing a large amount of moisture or foreign objects, the risk of battery pack 1 breaking down can be reduced. If the exhaust position is set as far away as possible from other devices and people in the vicinity, the risk of the exhausted air adversely affecting them can be reduced. Thus, both intake pipe 12 and exhaust pipe 13 are preferably provided because the risk of battery pack 1 breaking down and the risk of adversely affecting the surrounding environment can be reduced.

### (Second embodiment)

FIG. 2 is a schematic configuration diagram of a battery pack according to a second embodiment of the present invention. This embodiment is a variation of the first embodiment and differs from the first embodiment in that some additional components are provided. The differences from the first embodiment will be mainly described below.

As described above, even if hydrogen sulfide as a flammable gas is generated in enclosure 11, the hydrogen sulfide will not burn unless its concentration reaches the flammable range. On the other hand, no matter what the concentration of hydrogen sulfide is, unless the oxygen concentration inside enclosure 11 exceeds the limiting oxygen concentration for hydrogen sulfide, the hydrogen sulfide will still not burn. In this embodiment, therefore, intake pipe 12 is provided with oxygen remover 21 that removes oxygen from the air flowing into enclosure 11. This allows, combined with the action of air mover 14 which expels oxygen from enclosure 11 to the outside, reducing the oxygen concentration inside enclosure 11. Oxygen remover 21 is not particularly limited, and a known oxygen scavenger commonly used to remove oxygen may be used. Examples of the scavenger include metallic oxygen adsorbents containing iron, copper, nickel, etc., and organic oxygen adsorbents containing vitamin C, etc.

For the reasons described above, in this embodiment, the oxygen concentration inside enclosure 11 is preferably monitored, and for this purpose, battery pack 1 preferably includes oxygen sensor 22 that detects the oxygen concentration inside enclosure 11. In this case, controller 4 may control the output of air mover 14 based on the detection results of oxygen sensor 22. Specifically, the output of air mover 14 may be controlled to adjust the flow rate of air (specifically, air from which oxygen has been removed) flowing into enclosure 11 so that the oxygen concentration detected by oxygen sensor 22 is less than the limiting oxygen concentration for hydrogen sulfide. Furthermore, the output of battery cells 2 may be controlled based on the detection results of oxygen sensor 22. For example, if the oxygen concentration detected by oxygen sensor 22 becomes or is likely to become equal to or greater than the limiting oxygen concentration for hydrogen sulfide (for example, if it becomes equal to or greater than an arbitrarily set predetermined value below the limiting oxygen concentration), the output of at least some of battery cells 2 may be limited or stopped for safety reasons. The detection results of oxygen sensor 22 may be stored in controller 4 or transmitted to a server or blockchain network through controller 4 for immediate or future use.

Oxygen sensor 22 is not particularly limited and may be of a known type such as a zirconia type, an electrochemical type, a magnetic type, an optical type, a laser spectroscopy type, or a yellow phosphorus luminous type. The location of oxygen sensor 22 is not limited to the illustrated location as long as it can detect the oxygen concentration inside enclosure 11, and for example, it may be located on intake pipe 12 (specifically, downstream of oxygen remover 21) or exhaust pipe 13.

Meanwhile, the problem of hydrogen sulfide staying in enclosure 11 would not arise in the first place if hydrogen sulfide were not generated, and to prevent its generation, the temperature inside enclosure 11 is preferably lowered. However, too low a temperature inside enclosure 11 is not preferable because it may degrade the performance of battery cells 2. Therefore, battery pack 1 may include temperature sensor 23 that detects the temperature inside enclosure 11, and temperature regulator 24 that is controlled by controller 4 based on the detection results of temperature sensor 23 to adjust the temperature of air flowing into enclosure 11. This prevents the temperature inside enclosure 11 from rising and thus hydrogen sulfide from being generated even if battery cells 2 generate heat, and prevents the temperature inside enclosure 11 from dropping and thus the performance of battery cells 2 from degrading even if the outside air temperature drops. The output of at least some of battery cells 2 may be adjusted based on the detection results of temperature sensor 23; for example, when the temperature detected by temperature sensor 23 falls outside a predetermined range, the output of at least some of battery cells 2 may be limited or stopped.

Temperature sensor 23 is not particularly limited and may be of a known type such as a contact type or a non-contact type. Examples of the contact temperature sensor include a thermocouple, a resistance thermometer, and a thermistor, while examples of the non-contact temperature sensor include a radiation thermometer. The location of temperature sensor 23 is not limited to the illustrated location as long as it can detect the temperature inside enclosure 11. In the illustrated example, only one temperature sensor 23 is installed in enclosure 11, but multiple temperature sensors 23 may be provided. In this case, temperature sensors 23 may be located near every battery cell 2. The detection results of temperature sensor 23 may be stored in controller 4 or transmitted to a server or blockchain network through controller 4 for immediate or future use. Temperature regulator 24 is not particularly limited, and for example, a combination of a known cooler, such as an air-cooled, water-cooled, or refrigerant-type cooler, and a known heater, such as an electrothermal or heat pumptype heater, may be used. The location of temperature regulator 24 is not limited to the illustrated location as long as it can regulate the temperature of battery cells 2. For example, temperature regulator 24 may be installed inside enclosure 11 to directly control the temperature of battery cells 2, or it may be installed outside enclosure 11 to indirectly control the temperature of battery cells 2 through enclosure 11.

Oxygen remover 21 and temperature regulator 24 may be detachable from enclosure 11 together with intake pipe 12. Oxygen sensor 22 and temperature sensor 23 may also be detachable from enclosure 11, as well as hydrogen sulfide sensor 16.

Hydrogen sulfide remover 15 is preferably replaced with a new one regularly or depending on usage status, and a notification is preferably output from controller 4 to inform the user when a predetermined replacement time arrives or when replacement becomes necessary. The notification is preferably converted into a signal that appeals to the user's five senses, such as sight and hearing, before being output, when battery pack 1 is used, for example, as a storage battery for electric vehicles or for stationary applications.

To confirm whether hydrogen sulfide remover 15 meets the specified usage conditions, such as being a genuine product and not exceeding its expiration date, when replacing it, hydrogen sulfide remover 15 is preferably assigned identifier 25 containing its own identification information. Identifier 25 may be an information storage medium such as a radio tag, or a code such as a one-dimensional or two-dimensional code, but is preferably a code, and more preferably a two-dimensional code such as a QR code (registered trademark). Correspondingly, preferably, controller 4 functions to communicate with a reading device (not shown) that reads identification information from identifier 25 so as to acquire the read data, and the information necessary to identify genuine products has been stored therein. Thus, controller 4 can determine whether hydrogen sulfide remover 15 meets the specified usage conditions based on the acquired identification information. Furthermore, if controller 4 determines that replaced hydrogen sulfide remover 15 does not meet the specified usage conditions, it can notify the user of this and also disable at least some of battery cells 2. Controller 4 may transmit the acquired identification information of hydrogen sulfide remover 15 and its determination result, as well as the usage status of hydrogen sulfide remover 15, to a server or a blockchain network. Alternatively, the data read from identifier 25 by the reading device may be transmitted not to controller 4, but to a server or blockchain network, where the above-described determination is performed and the determination result is transmitted to controller 4.

Controller 4 preferably functions to directly acquire the usage status (such as usage time) of all devices that are communication targets (air mover 14, sensors 16, 22, 23, etc.), and thus indirectly acquire the usage status of devices that are not communication targets (hydrogen sulfide remover 15, oxygen remover 21, etc.). Furthermore, to appropriately determine when hydrogen sulfide remover 15 needs to be replaced (i.e., its life), controller 4 may function to predict the life of hydrogen sulfide remover 15 based on the acquired usage status. Alternatively, or in addition, to allow an external management device to predict the life of hydrogen sulfide remover 15, controller 4 may function to transmit the acquired usage status to a server or blockchain network. The acquired usage status and life prediction results are preferably notified to the user by controller 4 or the external management device, if necessary, thereby enabling the planned replacement of hydrogen sulfide remover 15 according to the life prediction. As a result, the possibility of increased maintenance costs due to early replacement even though it is not necessary, or serious problems due to nonreplacement even though it when it is necessary, can be reduced. Such life prediction is advantageous in that it eliminates the need to perform inspection work necessary to determine when to replace hydrogen sulfide remover 15, thereby reducing inspection costs, including labor costs. Computer programs or artificial intelligence (AI) may be used to predict the life of hydrogen sulfide remover 15, but from the viewpoint of prediction accuracy, Al is preferably used.

The timing at which controller 4 acquires and transmits data on the usage status of the devices is not particularly limited, and for example, it may be performed regularly, or irregularly, such as automatically according to predetermined conditions or by external remote control. This allows for a more reliable understanding of the respective usage status. However, if similar data transmission is also performed from multiple other battery packs, the data transmission by controller 4 is preferably performed at a different timing from them, thereby ensuring reliable data transmission without causing network or server congestion. Controller 4 is preferably powered and driven by an independent power supply separate from battery cells 2 to ensure reliable data transmission even if the output of battery cells 2 must be stopped.

The above-described life prediction enables the planned replacement of hydrogen sulfide remover 15; however, depending on the environment (region) in which battery pack 1 is used or the manufacturing status of hydrogen sulfide remover 15, new or unused hydrogen sulfide remover 15 may not be available at the time when it is predicted to reach the end of its life. Specifically, if demand for hydrogen sulfide removers 15 is concentrated or a supply shortage occurs as a result in a particular region, new or unused hydrogen sulfide removers 15 may not be available as planned. To avoid this, controller 4 preferably functions to acquire location information and transmit it along with the usage status of the devices to a server or blockchain network. This enables the external management device to predict in advance how many and when hydrogen sulfide removers 15 will be needed in each region, and based on this, keep an optimal number of hydrogen sulfide removers 15 in stock for each region. The external management device may also notify the user of the best place to obtain hydrogen sulfide remover 15. As a result, hydrogen sulfide remover 15 can be obtained when and where it is needed, allowing for the planned replacement of hydrogen sulfide remover 15.

The above description related to the life prediction of hydrogen sulfide remover 15 also applies to all devices as communication targets whose usage status is directly acquired by controller 4, as well as other devices whose usage status is indirectly acquired thereby (such as oxygen remover 21). On the other hand, after replacing those parts, including hydrogen sulfide remover 15, the replaced parts are preferably collected to analyze their degree of deterioration, thereby improving the accuracy of life prediction of each part. Specifically, taking hydrogen sulfide remover 15 as an example, by collecting and analyzing it, the amount of hydrogen sulfide generated during use can be determined. Then, by checking that amount against the previously acquired usage status, data on the conditions and frequency of abnormalities occurring in battery cells 2 can be obtained, and based on the obtained data, the accuracy of life prediction of hydrogen sulfide remover 15 can be improved. Such data may be used to anticipate possible problems that may occur when new types of batteries are put into practical use.

### (Third embodiment)

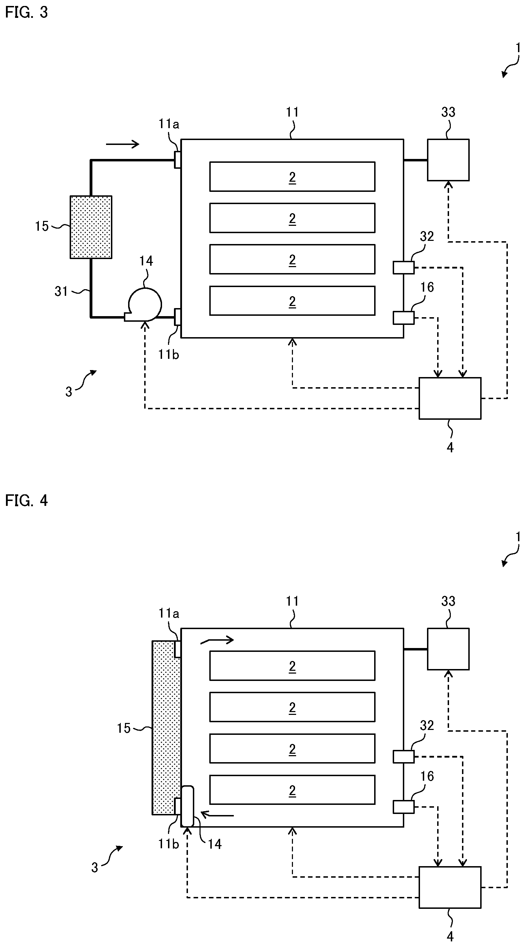

FIG. 3 is a schematic configuration diagram showing a battery pack according to a third embodiment of the present invention. This embodiment is a variation of the first embodiment and differs from the first embodiment in that the configuration of the intake and exhaust pipes is changed. The differences from the first embodiment will be mainly described below.

In the first embodiment, the upstream end (i.e., the other end) of intake pipe 12 and the downstream end (i.e., the other end) of exhaust pipe 13 are both open to the outside, whereas in this embodiment, they are connected to each other to form circulation pipe 31 for circulating the air inside enclosure 11 without discharging it to the outside. This reduces the possibility of hydrogen sulfide generation by preventing battery cells 2 from coming into contact with outside air containing moisture, compared to the first embodiment. Furthermore, in this embodiment, even if breakthrough of the above-described scavenger as hydrogen sulfide remover 15 has occurred, hydrogen sulfide can be prevented from leaking to the outside. As a result, the hydrogen sulfide concentration inside enclosure 11 can be reduced while reliably preventing the leakage of hydrogen sulfide to the outside, compared to the first embodiment.

In this embodiment, since circulation pipe 31 forms a closed circuit, the possibility of contact between battery cells 2 and the outside air is almost eliminated, as described above; however, there is concern that the internal pressure of enclosure 11 may increase or decrease in some cases. An increase in internal pressure can occur, for example, when the temperature inside enclosure 11 rises due to factors such as heat generated by battery cells 2 or an increase in the outside air temperature, or when gases such as hydrogen sulfide are generated from battery cells 2. A decrease in internal pressure may occur, for example, when the temperature inside enclosure 11 drops due to a decrease in the outside air temperature. Therefore, battery pack 1 preferably includes pressure sensor 32 that detects the pressure inside enclosure 11 and pressure regulator 33 that is controlled by controller 4 based on the detection results of pressure sensor 32 to adjust the pressure inside enclosure 11. This prevents an excessive increase or decrease in the internal pressure of enclosure 11. The output of at least some of battery cells 2 may be adjusted based on the detection results of pressure sensor 32; for example, when the pressure detected by pressure sensor 32 falls outside a predetermined range, the output of at least some of battery cells 2 may be limited or stopped.

Pressure sensor 32 is not particularly limited and may be of a known type such as a resistive film type, a capacitance type, piezoelectric element type, a photoelectric type, or a MEMS (MicroElectroMechanical Systems) type. The location of pressure sensor 32 is not limited to the illustrated location as long as it can detect the pressure inside enclosure 11. The detection results of pressure sensor 32 may be stored in controller 4 or transmitted to a server or blockchain network through controller 4 for immediate or future use.

Pressure regulator 33 is not particularly limited, and for example, an electric valve, a solenoid valve, a relief valve, a compressor, a gas cylinder, or an accumulator may be used. Pressure regulator 33 is classified into a type that releases the internal pressure of enclosure 11 and a type that pressurizes the inside of enclosure 11; a combination of these two types (such as an electric valve and a compressor) may be used, or a unit that integrates them may be used. Thus, the pressure inside enclosure 11 can be adjusted to an appropriate level depending on the situation. When using pressure regulator 33 that integrates the two types described above, it preferably functions to allow air into and out of enclosure 11 so as to eliminate the pressure difference between the inside and outside of enclosure 11 while preventing the intrusion of foreign objects and moisture from the outside. This also reduces the possibility of enclosure 11 being damaged due to the pressure difference between the inside and outside of enclosure 11. Examples of such pressure regulator 33 include an air filter, a moisture removal filter, and a breathable waterproof sheet.

The location of pressure regulator 33 is not limited to the illustrated location, but in the case of pressure regulator 33 having the function of releasing the internal pressure of enclosure 11 (including one integrating the two types described above), it is preferably located in circulation pipe 31 downstream of hydrogen sulfide remover 15. Alternatively, pressure regulator 33 may be directly installed to the vessel of hydrogen sulfide remover 15, in which case it is preferably located downstream of the hydrogen sulfide scavenger in the direction of air flow inside the vessel. This reduces the possibility of hydrogen sulfide leaking to the outside. However, to prevent gas containing hydrogen sulfide from being discharged outside enclosure 11 without passing through hydrogen sulfide remover 15, the on-off valve located on circulation pipe 31 on the side of air inlet 11a is preferably closed when pressure regulator 33 releases the internal pressure of enclosure 11. Even when pressure regulator 33 is installed to enclosure 11 as illustrated, to prevent hydrogen sulfide inside enclosure 11 from leaking to the outside as the pressure is released, a hydrogen sulfide remover similar to hydrogen sulfide remover 15 is preferably provided at its pressure outlet. On the other hand, pressure regulator 33 of a type that pressurizes the inside of enclosure 11 is preferably installed to enclosure 11. Thus, for example, when hydrogen sulfide is generated from battery cells 2, the pressure inside enclosure 11 can be increased to reduce the amount of hydrogen sulfide to be released from battery cells 2. Furthermore, outside air may also be introduced into enclosure 11 via pressure regulator 33 to increase the pressure inside enclosure 11 and thus further reduce the amount of hydrogen sulfide to be released from battery cells 2. In this case, pressure regulator 33 is preferably provided with a filtering means for removing elements other than the non-reactive gas (e.g., moisture and oxygen) contained in the outside air. Examples of the filtering means include a moisture removal column, a moisture removal filter, a breathable waterproof sheet, an oxygen removal column, and a nitrogen permeable membrane. The number of pressure regulators 33 is not limited to one as illustrated and may be two or more.

Circulation pipe 31 is preferably unitized as a gas flow unit with air mover 14 and hydrogen sulfide remover 15. Thus, when assembling battery pack 1, circulation pipe 31 including air mover 14 and hydrogen sulfide remover 15 can be handled as a single part, thereby reducing the number of parts and simplifying the manufacturing process. Such gas flow unit 14, 15, 31 may be detachably attached to enclosure 11, as well as gas flow members 12-15 of the first embodiment, and pressure regulator 33 may also be detachably attached to enclosure 11. Furthermore, pressure sensor 32 may also be detachable from enclosure 11, as well as hydrogen sulfide sensor 16.

It goes without saying that the components described in the second embodiment are also applicable to this embodiment. In this case, oxygen remover 21 and temperature regulator 24 may be provided at a position corresponding to exhaust pipe 13 (specifically, upstream of hydrogen sulfide remover 15), rather than at a position corresponding to intake pipe 12 (specifically, downstream of hydrogen sulfide remover 15), in circulation pipe 31. Oxygen remover 21 may be structurally and functionally integrated with hydrogen sulfide remover 15, thereby reducing the number of parts and facilitating replacement due to deterioration. Oxygen remover 21 and hydrogen sulfide remover 15 may be arranged in parallel or in a combination of series and parallel connections. In other words, for example, circulation pipe 31 may be provided with a bypass pipe that bypasses hydrogen sulfide remover 15, and oxygen remover 21 may be provided in the bypass pipe. This allows air to flow only through hydrogen sulfide remover 15 when only hydrogen sulfide is to be removed, and only through oxygen remover 21 when only oxygen is to be removed, thereby enabling a response to the condition of battery cells 2. Alternatively, circulation pipe 31 may be provided with a bypass pipe that bypasses hydrogen sulfide remover 15 and oxygen remover 21 arranged in series, and hydrogen sulfide remover 15 may be provided in the bypass pipe. In this embodiment, if oxygen remover 21 removes oxygen from inside enclosure 11, the volume of air inside enclosure 11 may decrease, resulting in a decrease in the pressure inside enclosure 11. Therefore, when oxygen remover 21 is applied to this embodiment, pressure regulator 33 is preferably of the type that pressurizes the inside of enclosure 11 so that the pressure inside enclosure 11 can be adjusted to an appropriate level. Specifically, for example, a compressor or a gas cylinder filled with inert gas can be used to compensate for the reduced air volume, so as to adjust the pressure inside enclosure 11 to an appropriate level.

### (Fourth embodiment)

FIG. 4 is a schematic configuration diagram of a battery pack according to a fourth embodiment of the present invention. This embodiment is a variation of the third embodiment and differs from the third embodiment in that the circulation pipe is omitted. The differences from the third embodiment will be mainly described below.

In this embodiment, circulation pipe 31 of the third embodiment is omitted, and accordingly, air mover 14 is installed inside enclosure 11 and hydrogen sulfide remover 15 is installed on enclosure 11. Specifically, air mover 14 is located at air outlet 11b inside enclosure 11, and hydrogen sulfide remover 15 is located on enclosure 11 so that its inlet and outlet are in direct communication with air outlet 11b and air inlet 11a of enclosure 11, respectively. Thus, although no circulation pie is provided, air in enclosure 11 can be circulated without discharging it to the outside, and the same effect as in the third embodiment can be achieved. "Direct communication" as used herein means, for example, that the inlet of hydrogen sulfide remover 15 and air outlet 11b of enclosure 11 are in communication with each other without piping, including cases where they are in communication via air mover 14. Therefore, in this embodiment as well, the location of air mover 14 is not limited to inside enclosure 11 and may be on enclosure 11. In other words, air mover 14 may be directly attached to air outlet 11b outside enclosure 11. Alternatively, air mover 14 may be directly attached to air inlet 11a outside enclosure 11, in which case the outlet of hydrogen sulfide remover 15 and air inlet 11a of enclosure 11 may be connected via air mover 14. Needless to say, the position of air mover 14 within enclosure 11 is not particularly limited.

### (Fifth embodiment)

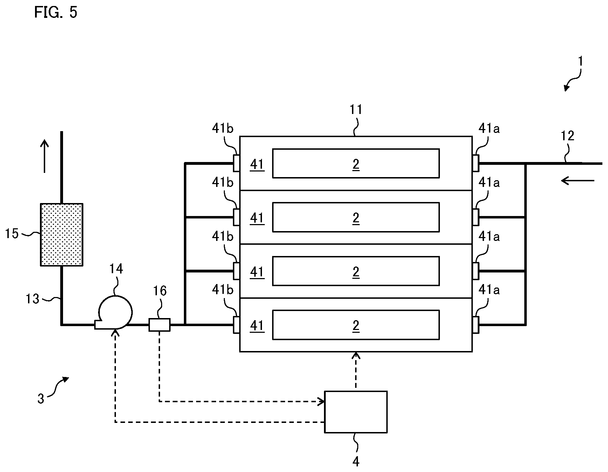

FIG. 5 is a schematic configuration diagram of a battery pack according to a fifth embodiment of the present invention. This embodiment is a variation of the first embodiment and differs from the first embodiment in that the configuration of the enclosure is changed, and the configuration of the intake and exhaust pipe is changed accordingly. The differences from the first embodiment will be mainly described below.

In this embodiment, enclosure 11 includes multiple container rooms 41 each for housing battery cell 2. Accordingly, the downstream end of intake pipe 12 is branched into multiple sections to be connected to multiple container rooms 41 (specifically, to respective air inlets 41a) via on-off valves (not shown). The upstream end of exhaust pipe 13 is also branched into multiple sections to be connected to multiple container rooms 41 (specifically, to respective air outlets 41b) via on-off valves (not shown). FIG. 4 shows four container rooms 41, but the number of container rooms 41 constituting enclosure 11 is not limited thereto. The number of battery cells 2 housed in container room 41 is also not limited to one as illustrated and may be two or more; they may form a battery module (i.e., an assembled battery). In addition, hydrogen sulfide sensor 16 is located in exhaust pipe 13 downstream of the junction of multiple branch pipes. Furthermore, controller 4 executes an abnormality determination process regularly or as needed to determine in which of multiple container rooms 41 hydrogen sulfide is being generated.

In the abnormality determination process, the on-off valves on intake pipe 12 and the on-off valves on exhaust pipe 13 are sequentially opened, and air mover 14 is activated accordingly. This causes air to flow sequentially from each container room 41 to hydrogen sulfide sensor 16, and the presence of hydrogen sulfide in each container room 41 is detected sequentially by hydrogen sulfide sensor 16. This detection method is advantageous in that since the air inside container room 41 can be forcibly introduced into hydrogen sulfide sensor 16, even the slightest generation of hydrogen sulfide can be detected without being missed. Based on the detection results thus obtained, it is then determined in which of multiple container rooms 41 hydrogen sulfide is being generated.

Once it is confirmed that hydrogen sulfide has been generated in certain container room 41, controller 4 opens the on-off valves on intake pipe 12 and exhaust pipe 13 connected to that container room 41 and activates air mover 14. This allows air flow to be generated only inside container room 41 where hydrogen sulfide generation has been confirmed, thereby more efficiently preventing hydrogen sulfide from staying therein and leaking to the outside. Controller 4 may also limit or stop the output of battery cell 2 in container room 41 where hydrogen sulfide generation has been confirmed, thereby minimizing the impact on the output of entire battery pack 1.

If cost and design constraints permit, hydrogen sulfide sensor 16 may be provided for each container room 41. Although not illustrated, temperature sensor 23 may also be provided for each container room 41, and based on the results thereof, the output of battery cell 2 in container room 41 where an excessive temperature rise is detected may be limited or stopped. As in the second embodiment, intake pipe 12 may be provided with oxygen remover 21, and as in the third embodiment, the upstream end of intake pipe 12 and the downstream end of exhaust pipe 13 may be connected to form a circulation pipe.

### Reference Signs List

- 1: Battery pack
- 2: Battery cell
- 3: Battery container
- 4: Controller
- 11: Enclosure
- 11a: Air inlet
- 11b: Air outlet
- 12: Intake pipe
- 13: Exhaust pipe
- 14: Air mover
- 15: Hydrogen sulfide remover (reactive gas remover)
- 16: Hydrogen sulfide sensor (gas sensor)
- 21: Oxygen remover
- 22: Oxygen sensor
- 23: Temperature sensor
- 24: Temperature regulator
- 25: Identifier
- 31: Circulation pipe
- 32: Pressure sensor
- 33: Pressure regulator
- 41: Container room
- 41a: Air inlet
- 41b: Air outlet

## Claims

1. A battery container comprising:
an enclosure having an air inlet and an air outlet for housing at least one battery cell;
an air mover that generates a flow of air inside the enclosure from the air inlet toward the air outlet; and
a reactive gas remover that removes reactive gas generated from the at least one battery cell and discharged from the air outlet by the flow of air.

2. The battery container of claim 1, further comprising:
an intake pipe having one end connected to the air inlet; and
an exhaust pipe having one end connected to the air outlet,
wherein the air mover is installed inside the enclosure, in the intake pipe, or in the exhaust pipe, and the reactive gas remover is installed in the exhaust pipe.

3. The battery container of claim 2, further comprising a circulation pipe formed of the intake pipe and the exhaust pipe having another end connected to another end of the intake pipe, for circulating air inside the enclosure.

4. The battery container of claim 1, wherein the reactive gas remover is installed on the enclosure and has an inlet and an outlet that are in direct communication with the air outlet and the air inlet, respectively, to allow air inside the enclosure to be circulated.

5. The battery container of any one of claims 1 to 4, further comprising a controller for controlling the air mover.

6. The battery container of claim 5, further comprising a gas sensor that detects a presence or concentration of the reactive gas in the enclosure,
wherein the controller activates the air mover to generate the flow of air when the reactive gas is detected by the gas sensor.

7. The battery container of claim 5, further comprising a pressure sensor that detects a pressure inside the enclosure, and a pressure regulator that is controlled by the controller based on a detection result of the pressure sensor to adjust the pressure inside the enclosure.

8. The battery container of any one of claims 1 to 4, wherein the reactive gas is a flammable gas.

9. The battery container of claim 8, further comprising:
a gas sensor that detects a presence or concentration of the reactive gas inside the enclosure; and
a controller that controls the air mover to adjust a flow rate of the air flowing into the enclosure so that the concentration of the flammable gas detected by the gas sensor is less than a lower flammability limit.

10. The battery container of claim 8, further comprising an oxygen remover that removes oxygen from the air flowing into the enclosure through the air inlet.

11. The battery container of claim 10, further comprising:
an oxygen sensor that detects an oxygen concentration inside the enclosure; and
a controller that controls the air mover to adjust a flow rate of the air flowing into the enclosure so that the oxygen concentration detected by the oxygen sensor is less than a limiting oxygen concentration for the flammable gas.

12. The battery container of claim 5, wherein the reactive gas remover is assigned an identifier containing identification information of the reactive gas remover, and
wherein the controller determines, based on the identification information read from the identifier, whether the reactive gas remover meets a specified condition.

13. The battery container of claim 5, further comprising a temperature sensor that detects a temperature inside the enclosure, and a temperature regulator that is controlled by the controller based on a detection result of the temperature sensor to adjust the temperature inside the enclosure.

14. The battery container of claim 5, wherein the controller predicts a life of the reactive gas remover based at least on a usage status of the air mover.

15. The battery container of claim 5, wherein the controller acquires location information and transmits the location information acquired as well as at least a usage status of the air mover to an outside.

16. The battery container of claim 2 or 3, wherein the intake pipe, the exhaust pipe, the air mover, and the reactive gas remover are detachably attached to the enclosure.

17. The battery container of claim 2 or 3, wherein the enclosure includes a plurality of container rooms each for housing a battery cell, and
wherein the one end of the intake pipe and the one end of the exhaust pipe are each branched into a plurality of sections to be connected to the plurality of container rooms.

18. The battery container of claim 17, further comprising:
at least one gas sensor that detects a presence of the reactive gas in the plurality of container rooms; and
a controller that selects, from among the plurality of container rooms, a container room inside which the flow of air is to be generated based on a detection result of the at least one gas sensor.

19. A battery pack comprising:
at least one battery cell;
the battery container of any one of claims 1 to 4; and
a controller for controlling the at least one battery cell.

20. The battery pack of claim 19, wherein the battery container includes a gas sensor that detects a presence of the reactive gas in the enclosure, and
wherein the controller limits or stops an output of the at least one battery cell when the reactive gas is detected by the gas sensor.

21. The battery pack of claim 19, wherein the battery container includes at least one of a temperature sensor that detects a temperature inside the enclosure and an oxygen sensor that detects an oxygen concentration inside the enclosure, and
wherein the controller adjusts, based on a detection result of at least one of the temperature sensor and the oxygen sensor, an output of the at least one battery cell.

22. The battery pack of claim 19, wherein the reactive gas remover is assigned an identifier containing identification information of the reactive gas remover, and
wherein the controller determines, based on the identification information read from the identifier, whether the reactive gas remover meets a predetermined condition, and disables the at least one battery cell if it determines that the reactive gas remover does not meet the predetermined condition.

23. The battery pack of claim 19, wherein the battery container includes a circulation pipe for circulating air inside the enclosure and a pressure sensor that detects a pressure inside the enclosure, the circulation pipe formed of an intake pipe having one end connected to the air inlet and an exhaust pipe having one end connected to the air outlet and another end connected to another end of the intake pipe, and
wherein the controller adjusts an output of the at least one battery based on a detection result of the pressure sensor.

24. A battery pack comprising:
a plurality of battery cells;
the battery container of claim 17; and
a controller for controlling the plurality of battery cells.

25. The battery pack of claim 24, wherein the battery container includes at least one gas sensor that detects a presence of the reactive gas in the plurality of container rooms, and
wherein the controller selects, from among of the plurality of battery cells, a battery cell whose output is to be limited or stopped based on a detection result of the at least one gas sensor.

26. A gas flow unit that allows gas to flow inside an enclosure for housing at least one battery cell, comprising:
a circulation pipe having both ends connected to the enclosure for circulating air inside the enclosure;
an air mover installed in the circulation pipe to generate a flow of air inside the enclosure; and
a reactive gas remover installed in the circulation pipe to remove reactive gas generated from the at least one battery cell and circulating through the circulation pipe.
